# EUROPEAN PATENT SPECIFICATION

(11) **EP 2 952 758 B1**
(45) Date of publication and mention of the grant of the patent: **06.03.2019**
(21) Application number: 15170500.1
(22) Date of filing: 03.06.2015
(51) Int. Cl.: F16C 19/36, F16C 19/38, F16C 23/08, F16C 33/36, B64C 3/00

(54) **CORROSION RESISTANT BEARING**
KORROSIONSBESTÄNDIGER LAGER
PALIER RÉSISTANT À LA CORROSION

(30) Priority: 03.06.2014 US 201462007210 P; 10.12.2014 US 201462090247 P
(43) Date of publication of application: 09.12.2015
(73) Proprietor: Roller Bearing Company of America, Inc., Oxford, CT 06478 (US)
(72) Inventor: Habibvand, Alex, Orange, CA 92867 (US); Gyuricsko, Frederick S., Torrington, CT 06790 (US); Phoenix, Jay, Bristol, CT 06010 (US); Fredericksen, Arnold E., New Hartford, CT 06057 (US); Cowles, John H. Jr, Unionville, CT 06085 (US)
(74) Representative: Bjerkéns Patentbyrå KB (Stockholm)

(56) References cited:
- EP-A1- 2 589 829
- WO-A1-2014/021958
- US-A- 3 594 851
- US-A1- 2010 033 965
- US-A1- 2011 274 382
- US-A1- 2014 061 381

## Description

### FIELD OF THE INVENTION

This invention relates to corrosion resistant nitrogen (CREN) bearing materials and more specifically to a bearing made from XD15NW® (XD15NW is a registered U.S. trademark of AUBERT & DUVAL COMPANY, FRANCE) (AMS 5920), Cronidur 30® (CRONIDUR is a registered U.S. trademark of Energietechnik Essen GmbH, GERMANY) (AMS 5925), 422 stainless (AMS 5655), and/or to corrosion resistant steel (CRES) bearing materials such as 440C stainless steel (ASM 5630, ASM 5618, or ASM 5880), and more particularly to a material for an hourglass bearing for use in aircraft wing end arrangements of other than a Boeing ® brand aircraft (Boeing is the subject of multiple U.S trademark registrations of The Boeing Company).

### BACKGROUND

Typical bearings include an inner member, for example a ball, surrounded by an outer member. A typical roller bearing includes a plurality of rollers disposed between the inner member and the outer member. A typical hourglass bearing includes a plurality of hourglass shaped rollers disposed between the inner member and the outer member. The inner member defines a radially outwardly facing convex bearing surface. The outer member defines a first radially inwardly facing convex bearing surface and a second radially inwardly facing convex bearing surface. Each of the rollers has a concave exterior surface extending between axial end faces and of the roller.

Corrosion is a major cause of bearing failure on aerospace structures. Corrosion can be due to moisture, salt spray, cleaning fluids, etc. There are several ways to prevent corrosion which include plating, such as Cadmium, on standard steel product, and the use of stainless steels. Stainless steels have differing corrosion resistance. Corrosion of the inner member, of the rollers and of the outer member impedes the ability of the bearing to function as intended. For example, a corroded bearing is less efficient than a bearing that has not undergone corrosion due to increased friction between contact surfaces as a result of said corrosion.

Bearings are typically used in aircraft wing flap arrangements. For example, U.S. Patent No. 8,714,493 describes a trailing edge flap arrangement for an aircraft wing that includes a drop linkage arrangement that includes one or more bearings.

WO 2014/021958 A1 discloses an edge flap arrangement corresponding to the preamble of the present claim 1.

### SUMMARY OF THE INVENTION

An edge flap arrangement according to the invention is defined in claim 1. In one embodiment, the hourglass bearing is configured for use in other than Boeing® aircraft, such as, for example, an Airbus® A-350® aircraft.

The present invention comprises a bearing assembly that includes an inner raceway and an outer raceway. The inner raceway is disposed at least partially in the outer raceway. In one embodiment, the outer raceway is fabricated from CREN, CRES, Cronidur 30, XD15NW, 440C stainless steel, and/or 422 stainless steel. In one embodiment, the inner raceway is fabricated from CREN, CRES, Cronidur 30, XD15NW, 440C stainless steel, and/or 422 stainless steel. A plurality of rollers is disposed between the inner raceway and the outer raceway. In one embodiment, the plurality of rollers is fabricated from CREN, CRES, Cronidur 30, XD15NW, 440C stainless steel, and/or 422 stainless steel. In one embodiment, each the inner raceway and the outer raceway are fabricated from CREN, CRES, Cronidur 30, XD15NW, 440C stainless steel, and/or 422 stainless steel. In one embodiment, each the inner raceway and the plurality of rollers are fabricated from CREN, CRES, Cronidur 30, XD15NW, 440C stainless steel, and/or 422 stainless steel. In one embodiment, each the outer raceway and the plurality of rollers are fabricated from CREN, CRES, Cronidur 30, XD15NW, 440C stainless steel, and/or 422 stainless steel. In one embodiment, each the inner raceway, the outer raceway, and the plurality of rollers are fabricated from CREN, CRES, Cronidur 30, XD15NW, 440C stainless steel, and/or 422 stainless steel.

In one embodiment, the edge flap arrangement further includes a second hourglass bearing assembly installed in the actuator for moving the main flap element relative to the aircraft wing. The second hourglass bearing assembly includes an inner raceway that defines a radially outwardly facing convex surface. The radially outward facing convex surface has an inner raceway radius of curvature. The second bearing assembly further includes an outer raceway that defines a radially inward facing convex inner surface. The radially inward facing convex inner surface has an outer raceway radius of curvature. The outer raceway is positioned around the inner raceway. The second bearing assembly further includes a first plurality of rollers disposed between the inner raceway and the outer raceway. Each of the plurality of first rollers has an hourglass shape and is in rolling engagement with the inner raceway and the outer raceway. In one embodiment, each of the plurality of rollers, the inner raceway, and the outer raceway include CREN, CRES, Cronidur 30, XD15NW, 440C stainless steel, and/or 422 stainless steel. In one embodiment, the hourglass bearing is configured for use in other than Boeing® aircraft, such as, for example, an Airbus® A-350® aircraft.

### BRIEF DESCRIPTION OF THE DRAWINGS

FIG. 1 is a perspective view of a cross section of an hourglass bearing of the present invention;
FIG. 2 is a cross sectional view of one of the rollers of the hourglass bearing of FIG. 1;
FIG. 3 is a perspective view of an edge flap of the present invention; and
FIG. 4 is a perspective view of the edge flap of FIG. 3, wherein the edge flap is in a partially extended position.

### DETAILED DESCRIPTION OF THE INVENTION

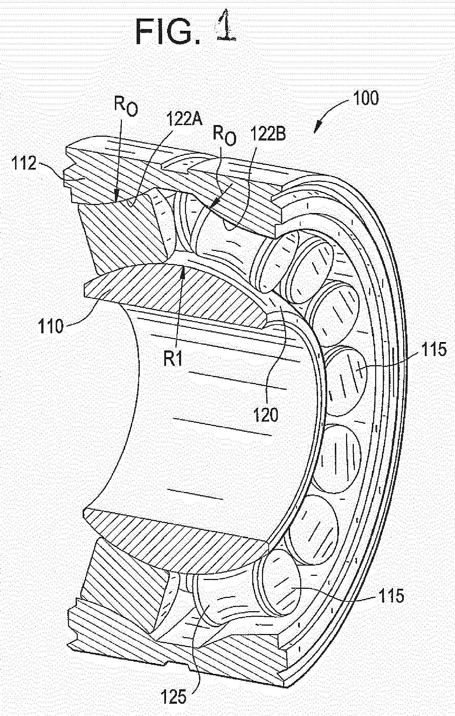

As shown in FIG. 1, an hourglass bearing assembly is generally designated by the numeral 100. The hourglass bearing assembly 100 includes an inner raceway 110 defining a radially outwardly facing convex surface 120 having a radius of curvature R1. The hourglass bearing assembly 100 includes an outer raceway 112 defining a radially inward facing convex inner surface 122A and 122B, each having an outer raceway radius of curvature Ro. The outer raceway 112 is positioned around the inner raceway 110. A plurality of rollers 115 is disposed between the inner raceway 110 and the outer raceway 112 in two rows. Each of the plurality of rollers 115 has an hourglass shape. Each of the plurality of rollers 115 in one row is in rolling engagement with the radially outwardly facing convex surface 120 of the inner raceway 110 and the radially inward facing convex inner surface 122A of the outer raceway 112. Each of the plurality of rollers 115 in a second row is in rolling engagement with the radially outwardly facing convex surface 120 of the inner raceway 110 and the radially inward facing convex inner surface 122B of the outer raceway 112. While an hourglass bearing is shown and described, the present invention is not limited in this regard, as any suitable type of bearing, including but not limited to journal bearings, roller bearings, and spherical plain bearings may be employed and are considered within the scope of the present invention.

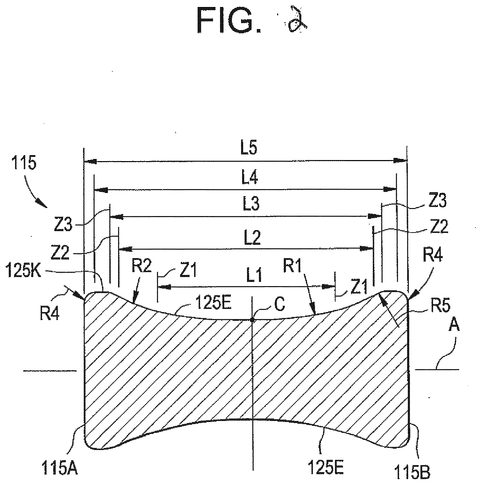

As shown in FIG. 2, each of the plurality of rollers 115 has a circular cross section symmetrical about a longitudinal axis A. Each of the plurality of rollers 115 has a first axial end 115A and a second axial end 115B and an overall length of L5. A chamfer R4 exists at each of the first axial end 115A and second axial end 115B. Each of the plurality of rollers 115 has an exterior surface 125E extending between the first axial end 115A and the second axial end 115B. A portion of the exterior surface 125E between length L4 and L3 is cylindrical. The exterior surface 125E defines a concave engagement surface 125E extending outwardly from a central portion C of the roller 115. The concave engagement surface 125E has a first radius of curvature R1 extending from the central portion C to each of two first transition zones Z1 positioned on opposing sides of the central portion C. The two first transition zones Z1 are spaced apart from one another by a distance L1. The concave engagement surface 125E has a second radius of curvature R2 extending outwardly from each of the two first transition zones Z1 to each of two second transition zones Z2. The two second transition zones Z2 are spaced part from one another by a distance L2.

As shown in FIG. 2, the second radius of curvature R2 is greater than the first radius of curvature R1. In one embodiment, the first radius of curvature R1 is between 50 percent and 95 percent of the second radius of curvature R2. In one embodiment, the first radius of curvature R1 is between 70 percent and 92 percent of the second radius of curvature R2.

In one embodiment, the rollers 115 are manufactured from CREN material. In one embodiment, CREN material for the rollers 115 is manufactured from Cronidur 30®. In one embodiment, CREN material for the rollers 115 is manufactured from XD15NW®. In one embodiment, the rollers 115 are manufactured from 422 stainless steel.

In one embodiment, the inner raceway 110 is manufactured from CREN material. In one embodiment, CREN material for the inner raceway 110 is manufactured from Cronidur 30®. In one embodiment, CREN material for the inner raceway 110 is manufactured from XD15NW®. In one embodiment, the inner raceway 110 is manufactured from 422 stainless steel.

In one embodiment, the outer raceway 112 is manufactured from CREN material. In one embodiment, CREN material for the outer raceway 112 is manufactured from Cronidur 30®. In one embodiment, CREN material for the outer raceway 112 is manufactured from XD15NW®. In one embodiment, the outer raceway 112 is manufactured from 422 stainless steel.

XD15NW® includes between 0.37 and 0.45 percent by weight carbon, up to 0.60 percent by weight silicon, up to 0.60 percent by weight manganese, between 15.00 and 16.5 percent by weight chromium, between 1.50 and 1.90 percent by weight molybdenum, between 0.20 and 0.40 percent by weight vanadium, between 0.16 and 0.25 percent by weight nitrogen and up to 0.30 percent by weight nickel.

Cronidur 30® includes between 0.25 and 0.35 percent by weight carbon, up to 1.00 percent by weight silicon, up to 1.00 percent by weight manganese, between 14.00 and 16.00 percent by weight chromium, up to 0.50 percent by weight nickel, between 0.85 and 1.10 percent by weight molybdenum and between 0.30 and 0.50 percent by weight nitrogen.

In one embodiment, the rollers 115 are manufactured from CRES material. In one embodiment, the CRES material for the rollers 115 is manufactured from 440C stainless steel.

The 440C stainless steel includes between 0.95 to 1.20 percent by weight carbon, up to 1.0 percent by weight silicon, up to 1.0 percent by weight manganese, 16.0 to 18.0 percent by weight chromium, 0.40 to 0.65 percent by weight molybdenum, up to 0.04 weight percent phosphorous, up to 0.75 weight percent nickel, up to 0.75 weight percent copper and up to 0.03 weight percent sulfur.

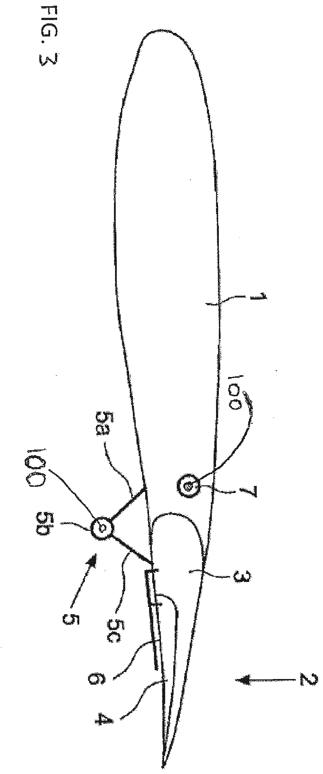

Referring to FIG. 3, an aircraft wing includes a main fixed wing portion 1 and a single slotted trailing edge flap arrangement 2. The flap arrangement 2 includes a main element 3 and an auxiliary flap element 4 supported by the main flap element 3. The main flap element 3 is pivotally supported from the fixed wing portion 1 by a drop hinge linkage arrangement 5. The drop hinge linkage arrangement includes a fixed strut 5A, a hinge point 5B and a drop link 5C. The fixed strut 5A is mounted to the fixed wing portion 1 and carries the hinge point 5B. The drop link 5c connects the main flap element 3 to the hinge point 5B. The auxiliary flap element 4 is supported by a rail 6 mounted to the main flap element 3. The auxiliary flap element 4 is slidably disposed upon the rail 6 for translational movement relative to the main flap element 3. The hinge point 5B has one of the bearing assemblies 100 mounted therein. In one embodiment, the bearing assembly 100 includes the inner raceway 110, outer raceway 112 and/or rollers 115 manufactured from CREN, for example XD15NW® or Cronidur 30®. In one embodiment, the bearing assembly 100 includes the inner raceway 110, outer raceway 112 and/or rollers 115 manufactured from CRES, for example 440C stainless steel. While the hinge point 5B is described as having one of the bearings 100 therein, the present invention is not limited in this regard as any number of the bearings 100 may be employed in the hinge point 5B. In one embodiment, the hinge point 5B has two of the bearings 100 installed therein; and in another embodiment, the hinge point 5B has two of the bearings 100 installed therein wherein the bearings 100 comprise different sized bearings. While the inner raceway 110, the outer raceway 112, and/or the rollers 115 are described herein as being manufactured from CREN, the present invention is not limited in this regard, as one or more of the inner raceway 110, the outer raceway 112, and/or the rollers 115 may be manufactured from CREN or CRES.

FIG. 3 shows the flap arrangement 2 in its retracted position. The main flap element 3 is stowed, tucked against the trailing edge of the fixed wing portion 1. The auxiliary flap element 4 is stowed in a forward position so as to be nested beneath the rear of the main flap element 3. When stowed, the auxiliary flap element 4 completes the aerofoil profile of the main flap element 3. The trailing edges of the main and auxiliary flap elements 3 and 4 are substantially coincident when the auxiliary flap element is in its retracted, stowed position. As further shown in FIG. 3, the main flap element 3 includes an actuator 7 (e.g., a linear or a rotary actuator), which is connected by a linkage arrangement (not shown) to the main flap element 3. In one embodiment, the actuator 7 has one of the bearings 100 (as described herein with reference to FIGS. 1-2) disposed therein. While the actuator 7 is described as having one of the bearings 100 therein, the present invention is not limited in this regard as any number of the bearings 100 may be employed in the actuator 7. For example, two bearings 100 are employed in a linear actuator. The actuator 7 provides for movement of the main flap element 3 relative to the fixed wing portion 1. In one embodiment, the actuator 7 provides for movement of the drop hinge linkage arrangement 5 which, in turn, provides for movement of the main flap element 3 relative to the fixed wing portion 1.

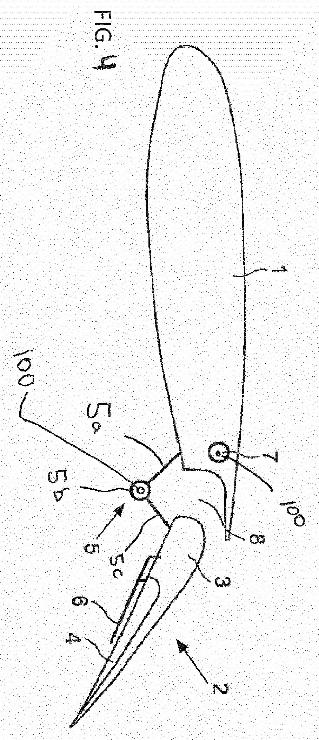

FIG. 4 illustrates the flap arrangement 2 in its partially extended position. The main flap element 3 is deployed by rotating the main flap element 3 downwardly using the drop hinge mechanism 5. Movement of the main flap element 3 is affected by rotary actuator 7 and the bearing 100 installed therein. The auxiliary flap element 4 can remain in its stowed, fully forward position as the main flap element 3 is deployed. In this partially extended configuration, the flap arrangement 2 functions substantially identically to a standard drop hinge flap arrangement. With the main flap element 3 extended by rotation about the drop hinge mechanism 5, a slot 8 is opened up between the fixed wing portion 1 and the main flap element 3. The single slotted flap configuration shown in FIG. 4 enables high pressure air from the lower wing surface to pass through the slot 8 to energize the boundary layer over the upper surface of the main flap element 3 so as to postpone stall in a conventional manner. The single slotted trailing edge flap arrangement 2 is configured for use with other than Boeing ® aircraft such as, for example, an Airbus® A-350® aircraft.

Although the invention has been described with reference to particular embodiments thereof, it will be understood by one of ordinary skill in the art, upon a reading and understanding of the foregoing disclosure, that numerous variations and alterations to the disclosed embodiments will fall within the scope of this invention and of the appended claims.

## Claims

1. An edge flap arrangement (2) for an aircraft wing (1), the arrangement comprising:
a main flap element (3) and an actuator (7) for moving the main flap element relative to the wing; and
a linkage arrangement (5) supporting the main flap element from the aircraft wing for movement relative to the wing, the linkage arrangement including a fixed strut (5A) secured to the aircraft wing and a drop link (5C) secured to the main flap, the fixed strut and the drop link being pivotally connected by a hinge point (5B),
the hinge point comprising at least a first hourglass bearing assembly (100), the first hourglass bearing assembly comprising:
an inner raceway (110) defining a radially outwardly facing convex surface (120) having an inner raceway radius of curvature R1;
an outer raceway (112) defining a radially inward facing convex inner surface (122A) having an outer raceway radius of curvature Ro, the outer raceway being positioned
around the inner raceway; and
a plurality of rollers (115) disposed between the inner raceway and the outer
raceway, each of the plurality of first rollers having an hourglass shape and being in rolling engagement with the inner raceway and the outer raceway; **characterized in that** the inner raceway (110), the outer raceway (112) and the plurality of rollers (115) are manufactured from a CRES material or a CREN material.

2. The edge flap arrangement (2) of claim 1, further comprising:
at least a second hourglass bearing assembly (100) installed in the actuator for moving the main flap element (3) relative to the aircraft wing (1), the at least one second hourglass bearing assembly comprising:
an inner raceway (110) defining a radially outwardly facing convex surface (120) having an inner raceway radius of curvature R1;
an outer raceway (112) defining a radially inward facing convex inner surface (122A) having an outer raceway radius of curvature Ro, the outer raceway being positioned around the inner raceway; and
a plurality of second rollers (115) disposed between the inner raceway and the outer raceway, each of the plurality of rollers having an hourglass shape and being in rolling engagement with the inner raceway and the outer raceway;
wherein the inner raceway (110), the outer raceway (112) and the plurality of rollers (115) are manufactured from a CRES material or a CREN material.

3. The edge flap arrangement (2) of claim 1 wherein the hinge point (5B) comprises a plurality of first bearings.

4. The edge flap arrangement (2) of claim 2 wherein the actuator (7) comprises a plurality of second bearings.

5. The edge flap arrangement (2) of claim 1, wherein the CREN includes between 0.37 and 0.45 percent by weight carbon, up to 0.60 percent by weight silicon, up to 0.60 percent by weight manganese, between 15.00 and 16.5 percent by weight chromium, between 1.50 and 1.90 percent by weight molybdenum, between 0.20 and 0.40 percent by weight vanadium, between 0.16 and 0.25 percent by weight nitrogen and up to 0.30 percent by weight nickel.

6. The edge flap arrangement (2) of claim 1, wherein the CREN includes between 0.25 and 0.35 percent by weight carbon, up to 1.00 percent by weight silicon, up to 1.00 percent by weight manganese, between 14.00 and 16.00 percent by weight chromium, up to 0.50 percent by weight nickel, between 0.85 and 1.10 percent by weight molybdenum and between 0.30 and 0.50 percent by weight nitrogen.

7. The edge flap arrangement (2) of claim 1, wherein CRES includes a 440C stainless steel.

8. The edge flap arrangement (2) of claim 7, wherein the 440C stainless steel includes between 0.95 to 1.20 percent by weight carbon, up to 1.0 percent by weight silicon, up to 1.0 percent by weight manganese, 16.0 to 18.0 percent by weight chromium, 0.40 to 0.65 percent by weight molybdenum, up to 0.04 weight percent phosphorous, up to 0.75 weight percent nickel, up to 0.75 weight percent copper and up to 0.03 weight percent sulfur.

9. The edge flap arrangement (2) of claim 1, wherein the CREN includes 422C stainless steel.

10. Use of the edge flap arrangement (2) of claim 1 in an Airbus® A-350® aircraft.

11. Use of the edge flap arrangement (2) of claim 1 in other than a Boeing® aircraft.

## Patentansprüche

1. Kantenklappenanordnung (2) für eine Flugzeugtragfläche (1), wobei die Anordnung umfasst:
ein Hauptklappenelement (3) und einen Aktuator (7) zum Bewegen des Hauptklappenelements bezogen auf die Tragfläche; und
eine Gestängeanordnung (5), die das Hauptklappenelement von der Flugzeugtragfläche aus für eine Bewegung bezogen auf die Tragfläche trägt, wobei die Gestängeanordnung eine feststehende Strebe (5A), die an der Flugzeugtragfläche befestigt ist, und eine Fallstange (5C), die an der Hauptklappe befestigt ist, umfasst, wobei die feststehende Strebe und die Fallstange durch einen Gelenkpunkt (5B) schwenkbar verbunden sind,
wobei der Gelenkpunkt wenigstens eine erste Sanduhrlagerbaugruppe (100) umfasst, wobei die erste Sanduhrlagerbaugruppe umfasst:
eine innere Laufbahn (110), die eine radial nach außen weisende konvexe Fläche (120) mit einem Krümmungsradius R1 der inneren Laufbahn definiert;
eine äußere Laufbahn (112), die eine radial nach innen weisende konvexe Innenfläche (122A) mit einem Krümmungsradius Ro der äußeren Laufbahn definiert, wobei die äußere Laufbahn um die innere Laufbahn herum angeordnet ist; und
eine Mehrzahl von Rollen (115), die zwischen der inneren Laufbahn und der äußeren Laufbahn angeordnet sind, wobei jede der Mehrzahl erster Rollen eine Sanduhrform aufweist und in Rolleingriff mit der inneren Laufbahn und der äußeren Laufbahn steht;
**dadurch gekennzeichnet, dass** die innere Laufbahn (110), die äußere Laufbahn (112) und die Mehrzahl von Rollen (115) aus einem CRES-Werkstoff oder einem CREN-Werkstoff hergestellt sind.

2. Kantenklappenanordnung (2) nach Anspruch 1, ferner umfassend:
wenigstens eine zweite Sanduhrlagerbaugruppe (100), die in dem Aktuator zum Bewegen des Hauptklappenelements (3) bezogen auf die Flugzeugtragfläche (1) eingebaut ist, wobei die wenigstens eine zweite Sanduhrlagerbaugruppe umfasst:
eine innere Laufbahn (110), die eine radial nach außen weisende konvexe Fläche (120) mit einem Krümmungsradius R1 der inneren Laufbahn definiert;
eine äußere Laufbahn (112), die eine radial nach innen weisende konvexe Innenfläche (122A) mit einem Krümmungsradius Ro der äußeren Laufbahn definiert, wobei die äußere Laufbahn um die innere Laufbahn herum angeordnet ist; und
eine Mehrzahl zweiter Rollen (115), die zwischen der inneren Laufbahn und der äußeren Laufbahn angeordnet sind, wobei jede der Mehrzahl von Rollen eine Sanduhrform aufweist und in Rolleingriff mit der inneren Laufbahn und der äußeren Laufbahn steht;
wobei die innere Laufbahn (110), die äußere Laufbahn (112) und die Mehrzahl von Rollen (115) aus einem CRES-Werkstoff oder einem CREN-Werkstoff hergestellt sind.

3. Kantenklappenanordnung (2) nach Anspruch 1, wobei der Gelenkpunkt (5B) eine Mehrzahl erster Lager umfasst.

4. Kantenklappenanordnung (2) nach Anspruch 2, wobei der Aktuator (7) eine Mehrzahl zweiter Lager umfasst.

5. Kantenklappenanordnung (2) nach Anspruch 1, wobei der CREN zwischen 0,37 und 0,45 Gewichtsprozent Kohlenstoff, bis zu 0,60 Gewichtsprozent Silicium, bis zu 0,60 Gewichtsprozent Mangan, zwischen 15,00 und 16,5 Gewichtsprozent Chrom, zwischen 1,50 und 1,90 Gewichtsprozent Molybdän, zwischen 0,20 und 0,40 Gewichtsprozent Vanadium, zwischen 0,16 und 0,25 Gewichtsprozent Stickstoff und bis zu 0,30 Gewichtsprozent Nickel enthält.

6. Kantenklappenanordnung (2) nach Anspruch 1, wobei der CREN zwischen 0,25 und 0,35 Gewichtsprozent Kohlenstoff, bis zu 1,00 Gewichtsprozent Silicium, bis zu 1,00 Gewichtsprozent Mangan, zwischen 14,00 und 16,00 Gewichtsprozent Chrom, bis zu 0,50 Gewichtsprozent Nickel, zwischen 0,85 und 1,10 Gewichtsprozent Molybdän und zwischen 0,30 und 0,50 Gewichtsprozent Stickstoff enthält.

7. Kantenklappenanordnung (2) nach Anspruch 1, wobei der CRES einen nichtrostenden 440C-Stahl umfasst.

8. Kantenklappenanordnung (2) nach Anspruch 7, wobei der nichtrostende 440C-Stahl zwischen 0,95 bis 1,20 Gewichtsprozent Kohlenstoff, bis zu 1,0 Gewichtsprozent Silicium, bis zu 1,0 Gewichtsprozent Mangan, 16,0 bis 18,0 Gewichtsprozent Chrom, 0,40 bis 0,65 Gewichtsprozent Molybdän, bis zu 0,04 Gewichtsprozent Phosphor, bis zu 0,75 Gewichtsprozent Nickel, bis zu 0,75 Gewichtsprozent Kupfer und bis zu 0,03 Gewichtsprozent Schwefel enthält.

9. Kantenklappenanordnung (2) nach Anspruch 1, wobei der CREN einen nichtrostenden 422C-Stahl umfasst.

10. Verwendung der Kantenklappenanordnung (2) nach Anspruch 1 in einem Flugzeug vom Typ Airbus® A-350®.

11. Verwendung der Kantenklappenanordnung (2) nach Anspruch 1 in einem anderen als einem Boeing®-Flugzeug.

## Revendications

1. Agencement de volet de bord (2) pour une aile d'aéronef (1), l'agencement comprenant :
un élément de volet principal (3) et un actionneur (7) pour déplacer l'élément de volet principal par rapport à l'aile ; et
un agencement de tringlerie (5) supportant l'élément de volet principal depuis l'aile d'aéronef afin qu'il puisse se déplacer par rapport à l'aile, l'agencement de tringlerie comprenant une jambe de force fixe (5A) fixée à l'aile d'aéronef et une tringle d'articulation descendante (5C) fixée au volet principal, la jambe de force fixe et la tringle d'articulation descendante étant reliées de manière pivotante par un point d'articulation (5B),
le point d'articulation comprenant au moins un premier ensemble de palier en sablier (100), le premier ensemble de palier en sablier comprenant :
un chemin de roulement interne (110) définissant une surface convexe dirigée radialement vers l'extérieur (120) ayant un rayon de courbure de chemin de roulement interne RI ;
un chemin de roulement externe (112) définissant une surface intérieure convexe tournée radialement vers l'intérieur (122A) ayant un rayon de courbure de chemin de roulement externe Ro, le chemin de roulement externe étant positionné autour du chemin de roulement interne ; et
une pluralité de galets (115) disposés entre le chemin de roulement interne et le chemin de roulement externe, chacun de la pluralité de premiers galets ayant une forme de sablier et étant en coopération de roulement avec le chemin de roulement interne et le chemin de roulement externe ; **caractérisé en ce que** le chemin de roulement interne (110), le chemin de roulement externe (112) et la pluralité de galets (115) sont fabriqués à partir d'un matériau CRES ou d'un matériau CREN.

2. Agencement de volet de bord (2) selon la revendication 1, comprenant en outre : au moins un second ensemble de palier en sablier (100) installé dans l'actionneur pour déplacer l'élément de volet principal (3) par rapport à l'aile d'aéronef (1), le au moins un second ensemble de palier en sablier comprenant :
un chemin de roulement interne (110) définissant une surface convexe dirigée radialement vers l'extérieur (120) ayant un rayon de courbure interne de chemin de roulement RI ;
un chemin de roulement externe (112) définissant une surface intérieure convexe tournée radialement vers l'intérieur (122A) ayant un rayon de courbure externe de chemin de roulement Ro, le chemin de roulement externe étant positionné autour du chemin de roulement interne ; et
une pluralité de seconds galets (115) disposés entre le chemin de roulement interne et le chemin de roulement externe, chacun de la pluralité de galets ayant une forme de sablier et étant en coopération de roulement avec le chemin de roulement interne et le chemin de roulement externe ;
dans lequel le chemin de roulement interne (110), le chemin de roulement externe (112) et la pluralité de galets (115) sont fabriqués à partir d'un matériau CRES ou d'un matériau CREN.

3. Agencement de volet de bord (2) selon la revendication 1, dans lequel le point d'articulation (5B) comprend une pluralité de premiers paliers.

4. Agencement de volet de bord (2) selon la revendication 2, dans lequel l'actionneur (7) comprend une pluralité de seconds paliers.

5. Agencement de volet de bord (2) selon la revendication 1, dans lequel le CREN comprend entre 0,37 et 0,45 % en poids de carbone, jusqu'à 0,60 % en poids de silicium, jusqu'à 0,60 % en poids de manganèse, entre 15 et 16,5 % en poids de chrome, entre 1,50 et 1,90 % en poids de molybdène, entre 0,20 et 0,40 % en poids de vanadium, entre 0,16 et 0,25 % en poids d'azote et jusqu'à 0,30 % en poids de nickel.

6. Agencement de volet de bord (2) selon la revendication 1, dans lequel le CREN comprend entre 0,25 et 0,35 % en poids de carbone, jusqu'à 1 % en poids de silicium, jusqu'à 1 % en poids de manganèse, entre 14 et 16,00 % en poids de chrome, jusqu'à 0,50 % en poids de nickel, entre 0,85 et 1,10 % en poids de molybdène et entre 0,30 et 0,50 % en poids d'azote.

7. Agencement de volet de bord (2) selon la revendication 1, dans lequel le CRES comprend un acier inoxydable 440C.

8. Agencement de volet de bord (2) selon la revendication 7, dans lequel l'acier inoxydable 440C comprend entre 0,95 et 1,20 % en poids de carbone, jusqu'à 1 % en poids de silicium, jusqu'à 1 % en poids de manganèse, 16,0 à 18,0 % en poids chrome, 0,40 à 0,65 % en poids de molybdène, jusqu'à 0,04 % en poids de phosphore, jusqu'à 0,75 % en poids de nickel, jusqu'à 0,75 % en poids de cuivre et jusqu'à 0,03 % en poids de soufre.

9. Agencement de volets de bord (2) selon la revendication 1, dans lequel le CREN comprend de l'acier inoxydable 422C.

10. Utilisation de l'agencement de volet de bord (2) selon la revendication 1 dans un avion Airbus® A-350®.

11. Utilisation de l'agencement de volet de bord (2) selon la revendication 1 dans un avion autre qu'un avion Boeing®.
